# EUROPÄISCHE PATENTANMELDUNG

(11) **EP 1 234 733 A2**
(43) Veröffentlichungstag der Anmeldung: **28.08.2002**
(21) Anmeldenummer: 02001381.9
(22) Anmeldetag: 19.01.2002
(51) Int. Cl.: B60R 25/02

(54) **Vorrichtung zum fallweisen Sperren einer Lenksäule in einem Fahrzeug**

(30) Priorität: 23.02.2001 DE 20103203 U
(71) Anmelder: HUF HÜLSBECK & FÜRST GMBH & CO. KG, 42551 Velbert (DE)
(72) Erfinder: Landmann, Alfred, 82216 Maisach-Überacker (DE)
(74) Vertreter: Mentzel, Norbert, Dipl.-Phys.

(57) **Zusammenfassung**

Bei einer Vorrichtung dieser Art gibt es ein kraftbeaufschlagtes Sperrglied, welches von einer Steuereinrichtung zwischen zwei Lagen verstellt wird, nämlich einer Sperrlage (40.1) und einer Freigabelage der Lenksäule (10). Um eine unproblematische, stufenlose Sperrung der Lenksäule (10) zu erreichen wird vorgeschlagen, das Sperrglied aus mindestens einer Klemmbacke (21, 22) aufzubauen, welches eine unprofilierte, im wesentlichen glatte Reibfläche aufweist. Am Umfang der Lenksäule (10) sitzt eine profilfreie, im wesentlichen ebenfalls glatte Gegenreibfläche (13). Die Steuereinrichtung wirkt auf einen Kraftgenerator (40), welcher zwar in der Sperrlage (40.1) eine gegen die Gegenbremsfläche hin gerichtete Klemmkraft auf die Klemmbacke (21, 22) ausübt, aber in der Freigabelage die Klemmkraft ausschaltet, (Fig. 1).

## Beschreibung

Die Erfindung richtet sich auf eine Vorrichtung der im Oberbegriff des Anspruches 1 angegebenen Art. Bei der bekannten Vorrichtung dieser Art besteht das Sperrglied aus einem profilierten Bolzen, welcher in der Sperrlage der Vorrichtung von einem Motor in einen Zahnkranz (DE 199 24 835 A1) bzw. in ein Hohlprofil (DE 199 29 435 A1) der Lenksäule eingeführt wird.

Bei der letztgenannten Vorrichtung ist der Bolzen mit einem, von einem Motor angetriebenen Hubglied gemeinsam beweglich und eine dazwischen geschaltete Feder belastet den Bolzen im Ausschubsinne. Außerdem wirkt auf das Hubglied ständig eine Rückstellkraft, die den Bolzen gegen das Hohlprofil der Lenksäule zu drücken sucht. In der Sperrlage kann der Bolzen nur in bestimmten Drehstellungen der Lenksäule in Eingriff kommen, während in den übrigen Drehstellungen eine Verriegelung nicht möglich ist. Umgekehrt kann, bei Übergang in die Freigabelage, das Herausziehen des Bolzens aus dem Hohlprofil erschwert sein. Dies passiert z.B.dann, wenn die Lenksäule während der Sperrlage im Umfang des verfügbaren Spiegels noch verdreht wurde und diese Verdrehung durch die an einen Bordstein stoßenden Räder des Fahrzeugs fixiert ist.

Der Erfindung liegt die Aufgabe zugrunde, eine einfache, zuverlässige Vorrichtung der im Oberbegriff des Anspruches 1 genannten Art zu entwickeln, welche die vorgenannten Nachteile vermeidet. Dies wird erfindungsgemäß durch die im Anspruch 1 angeführten Maßnahmen erreicht, denen folgende besondere Bedeutung zukommt.

Die Erfindung vermeidet einen formschlüssigen Eingriff zwischen dem Sperrglied und der Lenksäule, weil sie eine kraftschlüssige Sperrlage zwischen der Reibfläche einer Klemmbacke und einer Gegenreibfläche an der Lenksäule vorsieht. Dadurch ist sofort, in jeder der Drehstellungen der Lenksäule, eine zuverlässige Sperrlage möglich, wie auch der Übergang in die Freigabelage stets störungsfrei abläuft. Ermöglicht wird dies durch einen Kraftgenerator, der in der Sperrlage eine Klemmkraft auf die Klemmbacke ausübt und dadurch ihre Reibfläche gegen die Gegenreibfläche der Lenksäule drückt. In der Freigabelage dagegen ist die Klemmkraft ausgeschaltet und dann die Reibfläche gegenüber der Gegenreibfläche gelöst. Zwischen der Sperrlage und der Freigabelage der Klemmbacke genügt ein minimaler Weg. Der Luftspalt braucht im Freigabefall nur Zehntel oder Hundertstel Millimeter zu betragen.

Eine Klemmbacke kann den halben Umfangsbereich der Lenksäule umschließen. Diese flächige Berührung lässt eine hohe Klemmkraftbelastung entstehen und ergibt eine gute Lenksäulenführung. Dies lässt sich steigern, wenn man den gegenüberliegenden Umfangsbereich der Lenksäule von einer spiegelbildlich angeordneten weiteren Klemmbacke überdeckt. Dann kann die Vorrichtung, insbesondere wenn sie als spiegelbildliches Backenpaar ausgebildet ist, die Funktion einer Drehlagerstelle für die Lenksäule übernehmen. Dadurch ist es mit der Erfindung möglich, eine sonst erforderliche weitere Lagerstelle für die Lenksäule einzusparen.

Zur Erhöhung der Klemmkraft könnte die Klemmbacke bzw. die Klemmbacken aus mehreren Segmenten aufgebaut sein, welche segmentweise radial zur Lenksäulenachse beweglich sind. Keilprofile an den Gegensegmenten und gegebenenfalls Gegenkeilprofile an die Klemmkraft erzeugenden beweglichen Steuergliedern können eine Schar segmentweise wirksamer, in radialem Versatz zueinander gerichtete Klemmkräfte generieren. Ein solches Steuerglied kann z.B. aus einem Klemmring bestehen, welcher im Sperrlagenfall über die Sperrglieder fährt und den erforderlichen radialen Andruck der einzelnen Segmente bewirkt.

Weil ein Formschluss vermieden ist, vollzieht sich ein Übergang zwischen der Sperrlage in die Freigabelage, und umgekehrt, völlig geräuschlos. Wegen des minimalen Stellwegs der Klemmbacke bzw. der Klemmbacken oder ihrer Segmente sowie wegen der nur fallweise nur generierten Klemmkraft bzw. Freigabekraft genügen kleine Antriebe, die nicht nur preisgünstig, sondern vor allem raumsparend sind. Dies ergibt sich insbesondere wegen der in den Unteransprüchen erwähnten Keilantriebe zur Generierung der Klemmkraft bzw. der Freigabekraft.

Insbesondere wenn man ein Backenpaar baueinheitlich als eine die Lenksäule umschließende, drehfest platzierte Klemmschelle ausbildet, ergibt sich bereits eine Diebstahlssicherheit für das damit ausgerüstete Fahrzeug. Eine Demontage der Klemmhülse vom Vorrichtungsgehäuse nützt nämlich im Sperrlagefall nichts, weil die von der Klemmkraft belastete Klemmschelle auch im demontierten Zustand eine Drehung der Lenksäule ausschließt. Deswegen sind bei der erfindungsgemäßen Vorrichtung keine besonderen Vorkehrungen erforderlich, um einen Zugang zur Klemmbacke bzw. zur Klemmschelle zu erschweren oder ihre Demontage auszuschließen. Der Wegfall solcher Sicherungen spart Platz sowie Fertigungs- und Montagekosten.

Weitere Maßnahmen und Vorteile der Erfindung ergeben sich aus den Unteransprüchen, der weiteren Beschreibung und den Zeichnungen. In den Zeichnungen ist die Erfindung in einem Ausführungsbeispiel dargestellt. Es zeigen:
- Fig. 1,: in perspektivischer Darstellung und bei geöffnetem Gehäuse, die wichtigsten Bauteile der Erfindung, wenn die Sperrlage der Vorrichtung vorliegt,
- Fig. 2,: in gleicher Darstellung, wie Fig. 1, die Freigabelage der Bauteile,
- Fig. 3,: in Verkleinerung gegenüber Fig. 1 bzw. Fig. 2, eine Explosionsdarstellung der zur erfindungsgemäßen Vorrichtung gehörenden Bauteile vor ihrem Zusammenbau,

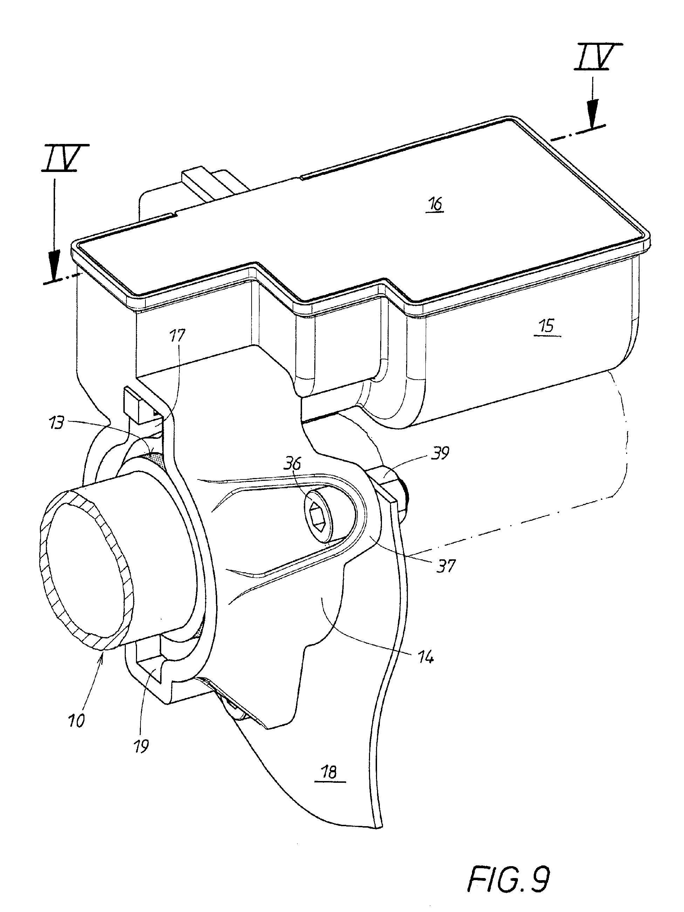

- Fig. 4,: in Vergrößerung, die Draufsicht auf einen achsparallelen Längsschnitt durch die Vorrichtung, längs der in Fig. 9 mit VI - VI gekennzeichneten Ebene, wenn die in Fig. 1 bereits gezeigte Sperrlage vorliegt,
- Fig. 5,: in einer zur Fig. 4 analogen Darstellung, die bereits in Fig. 2 erkennbare Freigabestellung der Vorrichtung,
- Fig. 6,: in Vergrößerung, die Stirnansicht auf die Vorrichtung mit einer radialen Schnittansicht der Lenksäule im Freigabefall,
- Fig. 7: die Ansicht auf einen weiteren Radialschnitt der erfindungsgemäßen Vorrichtung entlang der Schnittlinie VII - VII von Fig. 4,
- Fig. 8: einen zur Fig. 7 analogen Radialschnitt entlang der Schnittlinie VIII - VIII von Fig. 4 und
- Fig. 9,: in einer zur Fig. 1 bzw. 2 analogen perspektivischen Ansicht, die erfindungsgemäße Vorrichtung nach ihrem kompletten Zusammenbau.

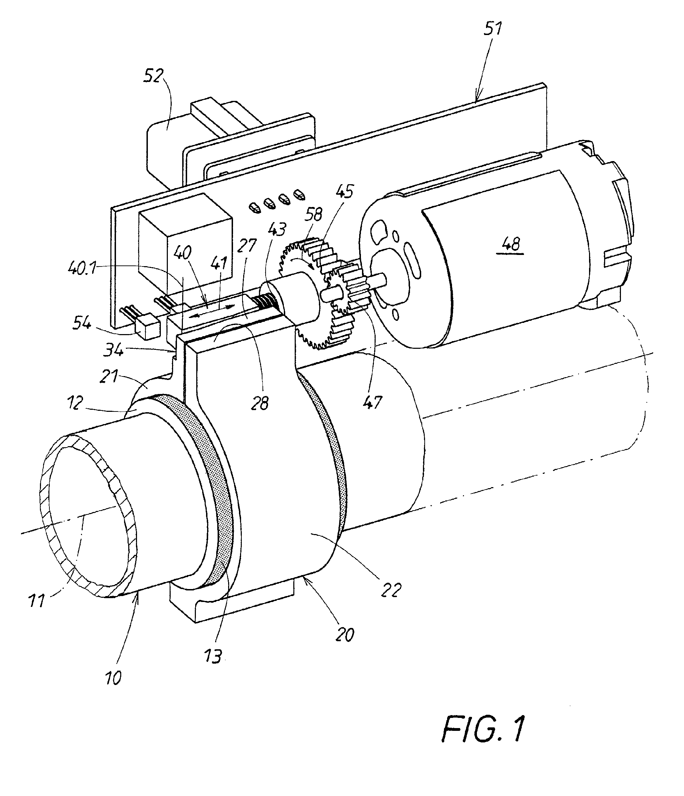

Die Vorrichtung dient zum fallweisen Sperren einer Lenksäule 10, deren Achse 11 in Fig. 1 strichpunktiert angedeutet ist. In einem definierten Abschnitt besitzt die Lenksäule 10 einen drehfest auf ihr sitzenden Bund 20, dessen zylindrische Umfangsfläche als Gegenreibfläche 13 für noch näher zu beschreibende Reibflächen 23 dient.

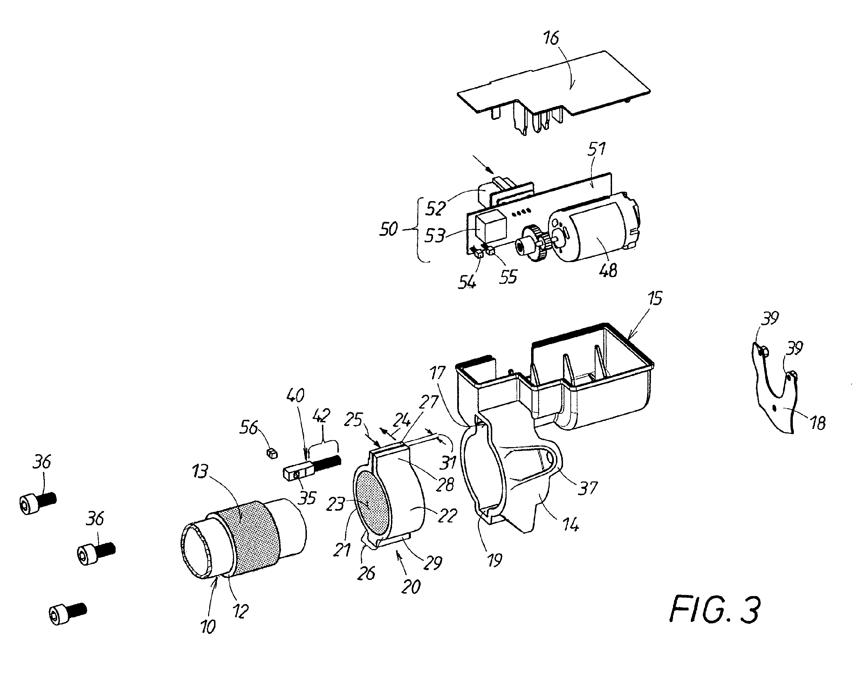

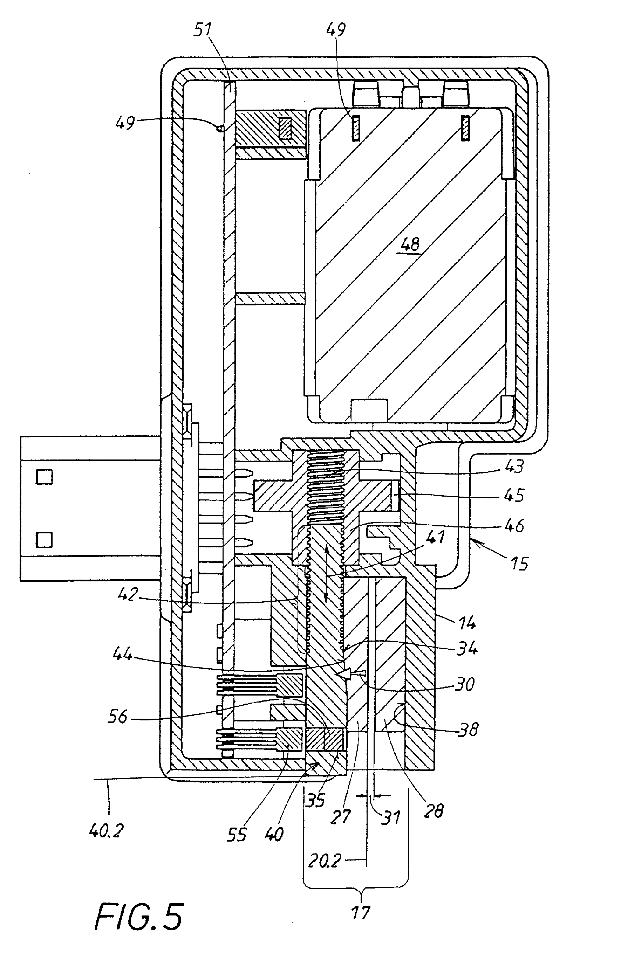

Um die Gegenreibfläche 13 ist eine besondere aus Fig. 3 ersichtliche Klemmschelle 20 gelegt, deren beide Schenkel zwei gegeneinander im Sinne der beiden Pfeile 24 und 25 bewegliche Klemmbacken 21, 22 bilden. Im Scheitelbereich zwischen den beiden Schenkeln befindet sich eine Biegestelle 26, die bestrebt ist, die beiden Backen 21, 22 im Sinne des erwähnten Pfeils 24 voneinander wegzudrücken. Es entsteht die in Fig. 5 durch einen Kraftpfeil 30 verdeutlichte Lüftungskraft zwischen den beiden Backen, die einen aus Fig. 5 ersichtlichen großen Spalt 31 zwischen den beiden Endflanschen 27, 28 entstehen lässt, mit denen die beiden Klemmschellen-Schenkel enden.

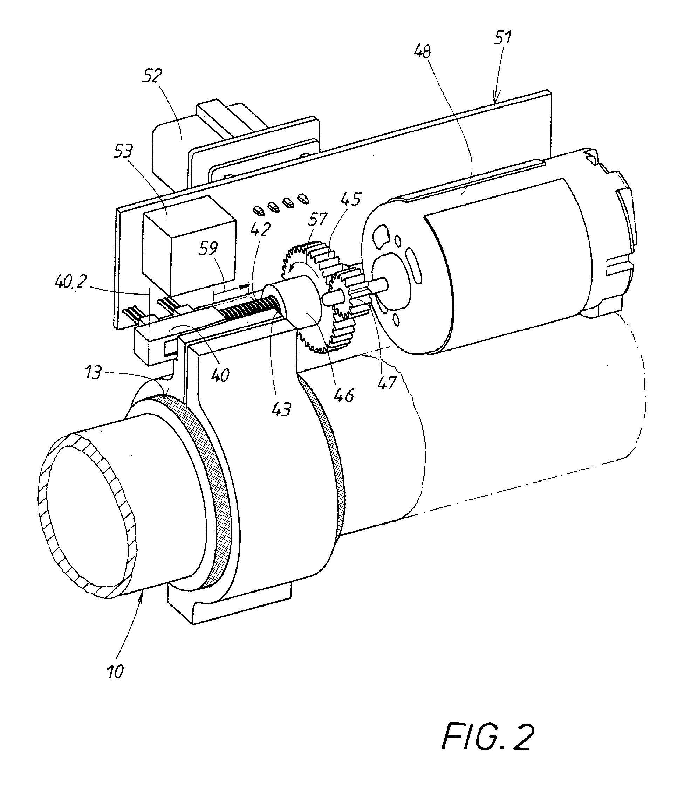

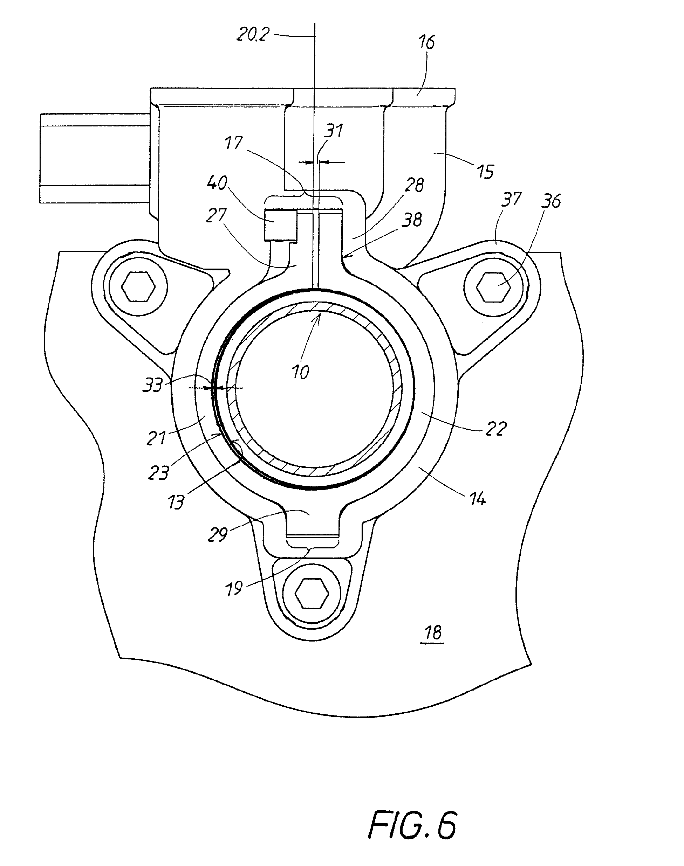

Ausweislich der Fig. 3 dient die Innenfläche der Klemmschelle 20 als Reibfläche 23. Die Lüftungslage ist in den Fig. 2, 5 und 6 verdeutlicht. Wie Fig. 6 zeigt, liegt zwischen den Reib- und Gegenreibflächen 23, 13 ein Lüftungsspalt 33 vor, der nur wenige Zehntel oder gar Hundertstel Millimeter zu betragen braucht. Die um die Gegenreibfläche 13 der Lenksäule 10 gelegte Klemmschelle 20 ist in einem Buchsenansatz 14 angeordnet, der zu einem aus einer Schale 15 und einem Deckel 16 bestehenden Gehäuse gehört. Wie Fig. 3 verdeutlicht, besitzt der Buchsenansatz 14 passende axiale Kanäle 17, 19, von denen der eine 17 zwei an den Schenkelenden befindlichen radialen Flansche 27, 28 aufnimmt, während im anderen Kanal 19 eine die Biegestelle 26 verstärkende radiale Rippe 29 formschlüssig einfährt. Die formschlüssige Verbindung im Montagefall ist am besten aus Fig. 6 zu erkennen. Das aus den Teilen 14, 15, 16 bestehende Gehäuse ist, wie Fig. 6 zeigt, an einer Konsole 18 im Fahrzeug befestigt. Dies geschieht mittels Schrauben 38, welche Durchbrüche in abragenden Flügeln 37 vom Buchsenansatz 14 durchragen und, wie Fig. 3 erkennen lässt, in Muttern 39 der Konsole 18 eingreifen. Den Unrundheiten an der Klemmschelle 20, wie die genannten Radialflansche 27, 28 und die Rippe 29 könnten entsprechende Schultern im Bereich des Trägers 18 zugeordnet sein. Dann ist auch nach Lösen der Schrauben 36 eine unerwünschte Drehung der Lenksäule in dem noch näher zu beschreibenden Sperrlagefall ausgeschlossen. Das erhöht die Diebstahlsicherheit.

In den erwähnten Fig. 2, 5 und 6 liegt jedoch eine "Freigabelage" der Schelle 20 vor. Im gezeigten Ausführungsbeispiel sind die beiden Klemmbacken 21, 22 zwar im wesentlichen spiegelbildlich gleich ausgebildet, doch wirken sie mit angrenzenden Bauteilen in zueinander unterschiedlicher Weise zusammen. Die eine Klemmbacke 22 stützt sich mit ihrem endseitigen Flansch 28 an einer radialen Schulter 38 des Gehäuseansatzes 14 ab, weshalb diese Klemmbacke 22 als "Ruhebacke" bezeichnet werden kann. Diese radiale Schulter 38 kann von der seitlichen Wand des in Fig. 6 erkennbaren Kanals 17 gebildet sein.

Die andere Backe 21 dagegen ist im Sinne der bereits mehrfach erwähnten Pfeile 24, 25 von Fig. 3 radial spreizbeweglich. Dazu ist der erwähnte axiale Kanal 17 ausreichend breit bemessen, um nicht nur ein Wegdrücken 24 bzw. ein entgegengesetztes Andrücken 25 seines endseitigen Flansches 27 zu erlauben, sondern auch um ein dafür maßgebliches Steuerglied 40 aufzunehmen. Dieses Steuerglied besteht im vorliegenden Fall aus einem Keil 40, der im Sinne des in Fig. 1 und 5 gezeigten Bewegungspfeils 41 längsverschieblich ist. Der Keil 40 besitzt eine Keilfläche 44, die mit einer auf der Außenflanke des dortigen Flansches 27 vorgesehenen Gegenkeilfläche 34 zusammenwirkt. In Fig. 5 sind die beiden Keilund Gegenkeilflächen 44, 34 zueinander axial versetzt. Der Keil 40 befindet sich dann in seiner durch eine axiale Hilfslinie 40.2 gekennzeichneten "unwirksamen Position". Die beiden Klemmbacken 21, 22 sind aufgrund der erwähnten, ihnen innewohnenden Lüftungskraft 30 in maximalem Abstand voneinander entfernt. Ihre Reibflächen 23 geben die Lenksäule 10 frei. Die eine Begrenzung des entstehenden großen Spalt 31 zwischen den beiden radialen Backen-Flanschen 27, 28 ist mit einer Hilfslinie 20.2 in Fig. 5 und 6 markiert. Diese Hilfslinie kennzeichnet die erwähnte "Freigabelage" der Klemmschelle 20.

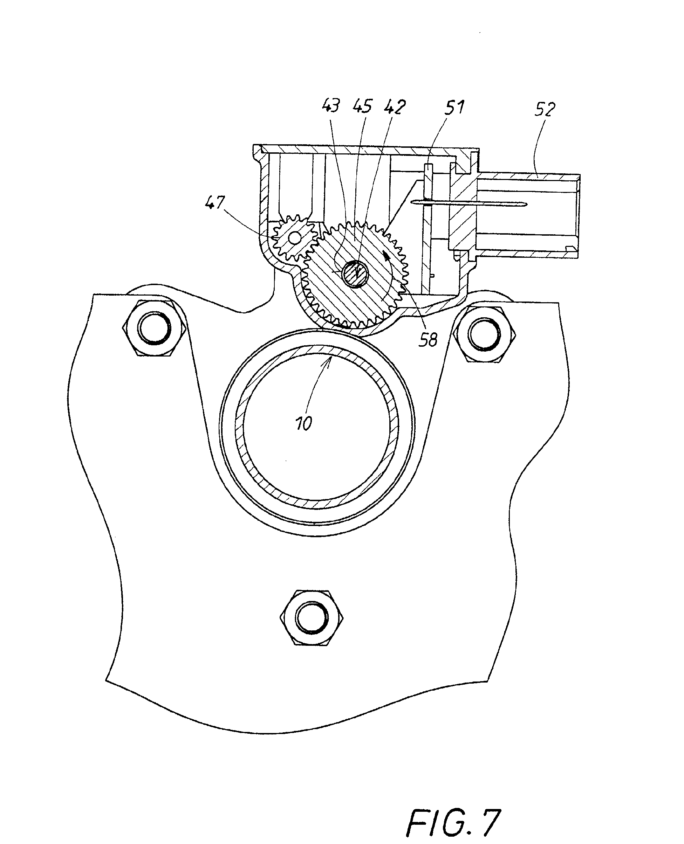

Die Längsbewegung 41 des Keils 40 kommt in besonderer Weise zustande. Wie Fig. 1 erkennen lässt, verläuft die Längsbewegung 41 des Keils 40 parallel zur Lenksäulen-Achse 11, was eine raumgünstige achsparallele Anordnung der zugehörigen Antriebsmittel ermöglicht, die in dem Gehäuse 15, 16 untergebracht sind. Als Antriebsmittel besitzt der Keil 40 selbst zunächst ein Gewindestück 42, welches in eine Gewindeaufnahme 43 eingreift. Die Gewindeaufnahme 43 befindet sich in der Nabe 46 eines Zahnrads 45. Wie besonders gut aus Fig. 7 zu erkennen ist, kämmt das Zahnrad 45 mit einem Ritzel 47, welches zu einem am besten aus Fig. 2 erkennbaren Elektromotor 48 od. dgl. gehört. Betrieben wird der Elektromotor 48 von einer Steuereinrichtung 50, deren Elemente teils außerhalb der gezeigten Vorrichtung und teils auf einer dem Gehäuse 15, 16 angeordneten Platine 51 sitzen. Die externen Bauteile sind über einen Stecker mit einer an der Platine 51 platzierten elektrischen Kupplung 52 verbunden. An den Leiterbahnen der Platine 51 sitzen diverse elektronische Bauteile, von denen im Ausführungsbeispiel von Fig. 2 lediglich ein Relais 53 gezeigt ist.

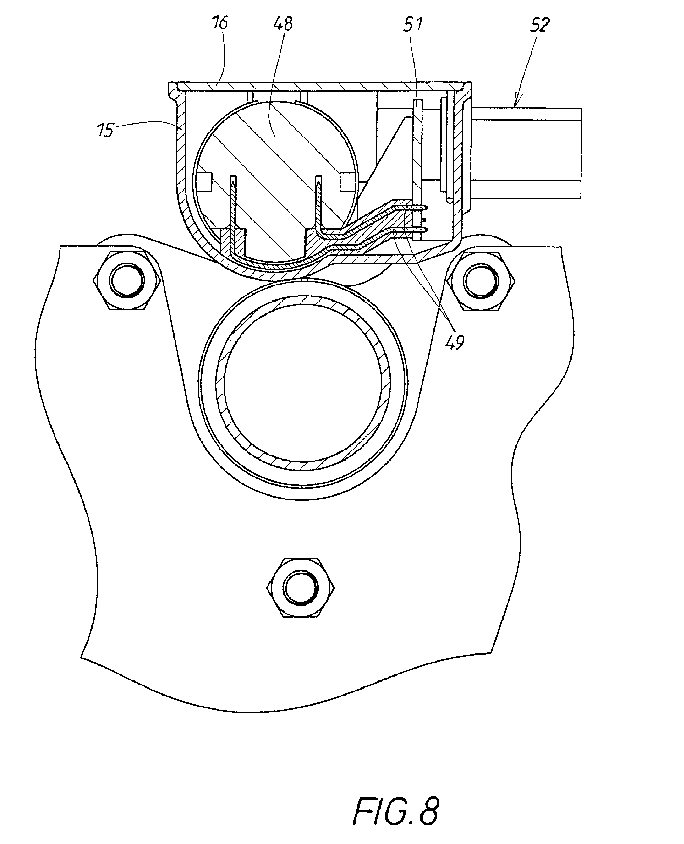

Fig. 8 zeigt die Kontaktierung des Motors 58 mit elektrischen Leitungen 49, die von bestimmten elektrischen Leitungen in der Platine 51 ausgehen. Sensoren 54, 55 ermitteln die jeweilige Lage des Keils 40, und melden diese den maßgeblichen Komponenten der Steuereinrichtung 50. Im vorliegenden Fall bestehen die Sensoren aus Hall-Sensoren, die mit einem in einer Querbohrung 35 sitzenden Permanent-Magneten 56 zusammenwirken. In der unwirksamen Position 40.2 des Keils wirkt der Permanent-Magnet 56, wie Fig. 5 verdeutlicht, mit dem äußeren Sensor 55 zusammen, der die erwähnte Freigabelage 20.2 detektiert und, wenn diese erreicht ist, den Motor 48 stoppt. Die Lenksäule 10 ist zur Lenkung des Fahrzeugs frei.

Um das Fahrzeug diebstahlssicher zu machen, wird die Steuereinrichtung 50 betätigt. Dies erfolgt in an sich bekannter Weise durch geeignete Auslösemittel. Bei einer Betätigung des Fahrzeugs über einen mechanischen Schlüssel erfolgt die Auslösung, wenn der Schlüssel im zugeordneten Schließzylinder in eine Nullstellung gebracht und dann aus dem Schließzylinder herausgezogen wird. Weiterhin ist es möglich, hierfür einen elektronischen Schlüssel zu verwenden, der über Transponder mit einer geeigneten Schlüsselaufnahme zusammenwirkt und beim Herausziehen des Schlüssels die Auslösung bewirkt. Gegebenenfalls ist bei einem automatischen Getriebe vorher ein Überführen des Wählhebels in die P-Stellung erforderlich. Zur Autorisierung der Betätigung einer Steuereinrichtung kann schließlich auch eine Identifikationskarte dienen, die auch auf Entfernung wirken kann. In diesem Fall erfolgt die erwähnte Auslösung der Steuereinrichtung durch eine weitere Handlung, z.B. eine Betätigung des Türgriffs.

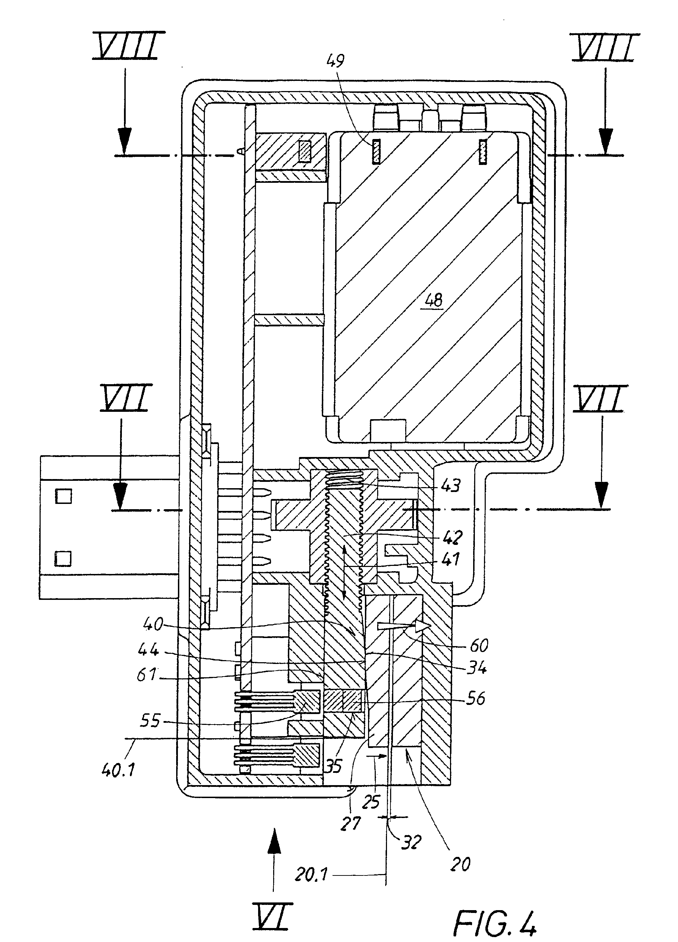

Wenn auf einem dieser Wege die Auslösung der Steuereinrichtung bewirkt ist, sorgt die Steuereinrichtung 50 dafür, dass der Elektromotor 48 über sein Relais 53 eingeschaltet wird. Dann wird das die Gewindeaufnahme 43 beinhaltende Zahnrad 45, in der Blickrichtung von Fig. 2, im Gegenuhrzeigersinn 57 angetrieben, sofern die Gewindegänge von 42, 43 ein Rechtsgewinde aufweisen. Bei einer solchen Drehung des Elektromotors 48 wird das Gewindestück 42 in die Gewindeaufnahme 43 eingeschraubt. Der Keil 40 wird in Fig. 2 um das dort mit 59 gekennzeichnete Wegstück bis zu der dort strichpunktiert verdeutlichten Position bewegt, deren Endlage in Fig. 1 und Fig. 4 ausgezogen gezeichnet und mit der Hilfslinie 40.1 gekennzeichnet ist.

Bei diesem Einschrauben gleitet die Keilfläche 44 auf die am Radialflansch 27 der Bewegungsbacke 21 sitzende Gegenkeilfläche 34 auf und gelangt gegebenenfalls auf ein im wesentlichen ebenes Endstück der Außenflanke, wie es die Fig. 4 zeigt. Das Gewindestück 42 ist maximal in seine Gewindeaufnahme 43 eingeschraubt. Der im Keil 40 sitzende Permanent-Magnet 56 ist in den Wirkbereich des inneren HallSensors 55 gekommen, der diese wirksame Position 40.1 der Steuereinrichtung 50 meldet. Dann schaltet die Steuereinrichtung 50 über das Relais 53 den Motor 48 aus und sichert die sich in Fig. 1 und 4 ergebende Lage der beweglichen Klemmbacke 51.

Wie Fig. 4 erkennen lässt, wurde der Keil 40 bei seiner Längsbewegung 41 mit seiner einen Längsfläche an einer Führungsfläche 61 entlang geführt, die im vorliegenden Fall im wesentlichen parallel zur Lenksäulenachse verläuft. Die Steigung der Keilund Gegenkeilflächen 44, 34 sorgen dafür, dass die Bewegungsbacke 21 über ihren radialen Endflansch 27 im Sinne des bereits erwähnten Pfeils 25 angedrückt werden wird. Der Spalt zwischen den beiden Endflanschen 27, 28 hat sich auf seinen minimalen Wert 32 von Fig. 4 verkleinert. Der an seiner Führungsfläche 61 sich abstützende eingefahrene Keil 40 übt eine durch einen Kraftpfeil 60 in Fig. 4 verdeutlichte Klemmkraft aus. Die Reibflächen 23 der beiden Klemmbacken 21, 22 werden dadurch kraftschlüssig gegen die Gegenreibfläche 13 am Umfang der Lenksäule 10 angedrückt. Die mit der axialen Hilfslinie 20.1 in Fig. 4 verdeutlichte Lage der Klemmschelle 20 erweist sich als "Sperrlage". Die Lenksäule 10 ist gegenüber Drehungen blockiert. Das Fahrzeug ist diebstahlssicher.

Der Übergang der Vorrichtung aus der Sperrlage 20.1 in die Freigabelage 20.2 erfolgt wieder durch Umsteuerung des Keils 40 aus einer wirksamen Position 40.1 von Fig. 1 bzw. 4 in die unwirksame Position 40.2 von Fig. 2 bzw. 5. Dies erfolgt wieder durch das für die betreffende Steuereinrichtung 50 maßgebliche Betätigen von Auslösemitteln in Verbindung mit für dieses Fahrzeug spezifischen Autorisierungen. Das kann in jeder an sich bekannten Weise erfolgen, z.B. durch mechanische oder elektronische Schlüssel und/oder durch Identifikationskarten und Betätiger. Ausgehend von der wirksamen Position 40.1 von Fig. 1 wird nun der Motor 48 im Gegensinne bestromt, oder ein ihm zugeordnetes Getriebe umgesteuert, weshalb jetzt das die Gewindeaufnahme 43 beinhaltende Zahnrad 45 im Uhrzeigersinn 58 angetrieben wird. Das Gewindestück 42 wird jetzt herausgeschraubt. Die Ausfahrbewegung des Keils 40 wird gestoppt, wenn über den äußeren Sensor 54 wieder die unwirksame Position 40.2 des Keils festgestellt ist. Weil die Keilfläche 44 die Gegenkeilfläche 34 freigegeben hat, ist keine Klemmkraft 60 mehr wirksam. Die im Gegensinne wirkende, aus Fig. 3 ersichtliche Lüftungskraft 30 sorgt für den beschriebenen großen Spalt 31 zwischen den beiden Backen-Flanschen 27, 28, was sich wieder in dem aus Fig. 6 ersichtlichen Lüftungsspalt 30 auswirkt.

Wie bereits erwähnt wurde, sind die Wege beim Andrücken 25 und Wegdrücken 24 der beiden Klemmbacken 21, 22 minimal; sie bewegen sich zwischen einem Klemmsitz in der Sperrlage 20.1 einerseits und einem leichten Spiel in der Freigabelage 20.2 andererseits. Durch entsprechende Übersetzung im Getriebe 42, 47 kann die wirkende Klemmkraft 60 auch mit schwachen Motoren 48 auf extrem hohen Werten gebracht werden. In beiden Lagen 20.1 und 20.2 findet praktisch eine Führung der Lenksäule 10 durch die Klemmschelle 20 statt. Diese Führung kann daher auch als Drehlagerstelle für die Lenksäule 10 genutzt werden. Dann hat die erfindungsgemäße Sperrvorrichtung zugleich die Funktion einer Lenksäulen-Lagerung, was bei bekannten Sperrvorrichtungen unmöglich war.

Im dargestellten Ausführungsbeispiel wird die Sperrlage 20.1 der Klemmschelle 20 durch die eingefahrene wirksame Position 40.1 des Keils 40 erreicht. In diesem Fall drückt der Keil 40 nur die eine Außenflanke 34 vom Flansch 27 der Bewegungsmarke 21. Alternativ könnte zugleich die Außenflanke vom Flansch 28 der anderen Klemmbacke 22 vom gleichen Steuerglied gegensinnig bewegt werden, wodurch von beiden Backen zwei zueinander gegensinnig wirkende Klemmkräfte 60 ausgeübt werden.

Eine weitere Alternative besteht darin, in der wirksamen Position einen gemeinsamen Keil zwischen die beiden Backen 21, 22 einfahren zu lassen und diese im Bereich ihrer Endflansche 27, 28 voneinander wegzudrücken. Dann würde die wirksame Position, im Gegensinne zum dargestellten Ausführungsbeispiel, eine Freigabelage der beiden Backen herbeiführen, während, umgekehrt, in unwirksamer Position die beiden Backen frei wären, um von sie gegensinnig belastenden Klemmkräften gegeneinander gedrückt zu werden. Bei diesem Gegeneinanderdrücken ist die zwischen den beiden Backen liegende Lenksäule eingeklemmt und blockiert.

### Bezugszeichenliste :

- 10: Lenksäule
- 11: Achse von 10
- 12: Bund von 10 für 13
- 13: Gegenreibfläche
- 14: Gehäuse-Buchsenansatz
- 15: Gehäuse-Schale
- 16: Gehäuse-Deckel
- 17: axialer Kanal in 14 für 27, 28, 40
- 18: Konsole, Träger für 14 bis 16
- 19: axialer Kanal in 14 für 29
- 20: Klemmschelle
- 20.1: Sperrlage von 20 (Fig. 1, 4)
- 20.2: Freigabelage von 20 (Fig. 2, 5, 6)
- 21: erste Klemmbacke, Bewegungsbacke
- 22: zweite Backe, Ruhebacke
- 23: Reibfläche von 21, 22
- 24: Pfeil der Wegdrückbewegung von 21 gegenüber 22
- 25: Pfeil der Andrückbewegung von 21 gegen 22
- 26: Biegestelle zwischen 21, 22 (Fig. 3, 6)
- 27: endseitiger radialer Flansch an 21
- 28: endseitiger radialer Flansch an 22
- 29: radiale Rippe von 20 bei 26 (Fig. 3)
- 30: Lüftungskraft zwischen 21, 22 (Fig. 5)
- 31: maximaler Spalt zwischen 27, 28 (Fig. 5)
- 32: minimaler Spalt zwischen 27, 28 (Fig. 4)
- 33: Lüftungsspalt zwischen 13, 23 (Fig. 6)
- 34: Außenfläche von 27, Gegenkeilfläche
- 35: Querbohrung in 40 für 56
- 36: Schraube für 14 an 18 (Fig. 3)
- 37: Flügel an 14 für 36
- 38: ortsfeste Stütze, radiale Schulter an 14 für 22
- 39: Mutter mit Innengewinde für 36
- 40: Steuerglied, Keil
- 40.1: wirksame Position von 40 (Fig. 1)
- 40.2: unwirksame Position von 40 (Fig. 2)
- 41: Längsbewegungspfeil von 40
- 42: Gewindestück an 40
- 43: Gewindeaufnahme für 42
- 44: Keilfläche an 40
- 45: Zahnrad mit 43
- 46: Nabe von 45 für 43
- 47: Ritzel von 48 für 45
- 48: Elektromotor
- 49: elektrische Leitungen für 48 (Fig. 8)
- 50: Steuereinrichtung (nur teilweise sichtbar)
- 51: Platine
- 52: elektrische Kupplung an 51
- 53: Relais an 51
- 54: äußerer Hall-Sensor, Freigabe-Sensor
- 55: innerer Hall-Sensor, Sperr-Sensor
- 56: Permanent-Magnet für 54, 55 an 40 (Fig. 3)
- 57: Drehung von 43, 45 im Gegenuhrzeigersinn (Fig. 2)
- 58: Drehung von 43, 45 im Uhrzeigersinn (Fig. 1)
- 59: Wegstück zwischen 40.1 und 40.2
- 60: Klemmkraft von 21, 22
- 61: Führungsfläche für 40 (Fig. 4)

## Patentansprüche

1. Vorrichtung zum fallweisen Sperren einer Lenksäule (10) in einem Fahrzeug,
mit einem kraftbeaufschlagten Sperrglied
und mit einer Steuereinrichtung (50), die das Sperrglied gegenüber der Lenksäule (10) zwischen zwei Lagen (20.1, 20.2) verstellt, nämlich
einer Sperrlage (20.1), wo die Drehung der Lenksäule (10) verhindert ist, und einer Freigabelage (20.2), wo eine Drehung möglich ist,
**dadurch gekennzeichnet ,**
**dass** das Sperrglied aus mindestens einer Klemmbacke (21; 22) besteht, die eine unprofilierte, im wesentlichen glatte Reibfläche (23) aufweist,
**dass** am Umfang der Lenksäule (10) eine profilfreie, im wesentlichen glatte Gegenreibfläche (13) sitzt,
und **dass** die Steuereinrichtung (50) auf einen Kraftgenerator (40) wirkt,
welcher zwar im Sperrlagenfall (20.1) eine gegen die Gegenreibfläche (13) hin gerichtete Klemmkraft (60) auf die Klemmbacke (61) ausübt,
welche aber in der Freigabelage (20.2) diese Klemmkraft (60) ausschaltet.

2. Vorrichtung nach Anspruch 1, **dadurch gekennzeichnet, dass** die Klemmbacke (61; 62) unter einer ständigen Lüftungskraft (30) steht, welche der Klemmkraft (60) entgegengerichtet und bestrebt ist, die Reibfläche (23) von der Gegenreibfläche (13) wegzudrücken (24).

3. Vorrichtung nach Anspruch 1 oder 2, **dadurch gekennzeichnet, dass** die Gegenreibfläche (13) der Lenksäule (10) zwischen einem Backenpaar (21, 22) angeordnet ist
und dass das Backenpaar (21, 22) sowohl einer voneinander weggerichteten Lüftungskraft (30), als auch einer aufeinander zu wirkenden Klemmkraft (60) ausgesetzt ist.

4. Vorrichtung nach Anspruch 3, **dadurch gekennzeichnet, dass** die eine Backe auf ihrer, der Lenksäule (10) abgekehrten Seite an einer ortsfesten Stütze (38) ruht und eine Ruhebacke (22) bildet,
während die andere Backe vom Kraftgenerator (40) gegen die Ruhebacke (22) hin beweglich (22) ist und als Bewegungsbacke (21) fungiert.

5. Vorrichtung nach Anspruch 3 oder 4, **dadurch gekennzeichnet, dass** das Backenpaar (21, 22) von den beiden Schenkeln einer Klemmschelle (20) gebildet ist,
und dass die Klemmschelle (20) die Lenksäule (10) im Bereich der Gegenreibfläche (13) umschließt.

6. Vorrichtung nach Anspruch 5, **dadurch gekennzeichnet, dass** die beiden Schenkel der Klemmschelle (20) durch mindestens ein Scharnier miteinander verbunden und gegeneinander schwenkbeweglich (24, 25) sind.

7. Vorrichtung nach Anspruch 5, **dadurch gekennzeichnet, dass** die beiden Schenkel der Klemmschelle (20) durch eine Biegestelle (26) miteinander verbunden sind
und dass die Biegestelle (26) die Lüftungskraft (30) erzeugt, welche im Freigabefall (20.2) die Reibflächen (23) der Schenkel von den Gegenreibflächen (13) der Lenksäule (10) wegdrückt (24).

8. Vorrichtung nach einem der Ansprüche 1 bis 7, **dadurch gekennzeichnet, dass** der Kraftgenerator einen geführten (61) Keil (40) aufweist, der mindestens eine Keilfläche (44) besitzt,
und dass der Keil (40) mit seiner Keilfläche (44) gegenüber einer Flanke (34) der Backe (21) bzw. gegenüber zwei Flanken beider Backen (21, 22) von der Steuereinrichtung (50) zwischen einer wirksamen und unwirksamen Position (20.1, 20.2) überführbar (41) ist.

9. Vorrichtung nach Anspruch 8, **dadurch gekennzeichnet, dass** die wirksame Position (40.1) des Keils (40) die Sperrlage (20.1) der Backe (21) bzw. der Backen (21, 22) bestimmt,
während in der Freigabelage (20.2) sich der Keil (40) in seiner unwirksamen Position (40.2) befindet.

10. Vorrichtung nach Anspruch 8 oder 9, **dadurch gekennzeichnet, dass** der Keil (40) zwischen seinen beiden Positionen (40.1, 40.2) längsbeweglich (41) geführt ist.

11. Vorrichtung nach Anspruch 10, **dadurch gekennzeichnet, dass** die Längsbewegung (41) des Keils (40) im wesentlichen parallel zur Lenksäulenachse (11) verläuft.

12. Vorrichtung nach einem der Ansprüche 8 bis 11, **dadurch gekennzeichnet, dass** die mit der Keilfläche (44) des Keils (40) zusammenwirkende Flanke der Backe (21) bzw. der Backen (21, 22) eine Gegenkeilfläche (34) aufweist.

13. Vorrichtung nach einem der Ansprüche 8 bis 12, **dadurch gekennzeichnet, dass** ein gemeinsamer Keil in seiner wirksamen Position zwischen die beiden Backen (21, 22) fährt, diese voneinander wegdrückt und in eine Freigabelage (20.2) gegenüber der Lenksäule (10) überführt
und dass in unwirksamer Position der Keil die beiden Backen (21, 22) freigibt, die Backen von Klemmkräften gegen die Gegenreibfläche der Lenksäule (10) gedrückt werden und sich in ihrer Sperrlage (20.1) befinden.

14. Vorrichtung nach einem der Ansprüche 8 bis 13, **dadurch gekennzeichnet, dass** der Keil (40) zu seiner Längsbewegung (41) ein Gewindestück (42) aufweist, welches in eine Gewindeaufnahme (43) eingreift,
dass die Gewindeaufnahme (43) rotativ (56, 57) von einem Motor (48) im Einschraub- und/oder Ausschraubsinne der ineinandergreifenden Gewinde (42, 43) antreibbar ist
und dass der Motor (48) von der Steuereinrichtung (50) ein- und ausschaltbar ist.

15. Vorrichtung nach Anspruch 14, **dadurch gekennzeichnet, dass** die Gewindeaufnahme (43) im Nabenbereich (46) eines Getriebe-Zahnrads (45) angeordnet ist und der Motor (48) mit dem Getriebe (45, 47) zusammenwirkt.

16. Vorrichtung nach einem der Ansprüche 1 bis 15, **dadurch gekennzeichnet, dass** die aus dem Keil (40), dem Motor (48) und gegebenenfalls dem Getriebe (45, 47) bestehende Baugruppe mit ihren Bewegungen (41) und Achsen achsparallel (11) zur Lenksäule (10) positioniert ist.

17. Vorrichtung nach einem der Ansprüche 8 bis 16, **dadurch gekennzeichnet, dass** im Bewegungspfad (41) des Keils (40) Sensoren (54, 55) angeordnet sind,
welche die wirksamen und/oder die unwirksamen Positionen (40.1, 40.2) des Keiles (40) detektieren und der Steuereinrichtung (50) melden
und dass die Steuereinrichtung (50) in Abhängigkeit von der Detektion den Motor (48) ein- und/oder ausschaltet und gegebenenfalls Anzeigemittel wirksam und unwirksam setzt.

18. Vorrichtung nach Anspruch 17, **dadurch gekennzeichnet, dass** die Sensoren aus zwei Hall-Sensoren (54, 55) bestehen,
und dass die Hall-Sensoren (54, 55) mit einem Permanent-Magneten (56) zusammenwirken, der gemeinsam mit dem Keil (40) mitbeweglich (41) ist.
